# FASCICULE DE BREVET EUROPEEN

(11) **EP 0 511 885 B1**
(45) Date de publication et mention de la délivrance du brevet: **12.07.1995**
(21) Numéro de dépôt: 92400857.6
(22) Date de dépôt: 27.03.1992
(51) Int. Cl.: B01J 20/18, B01D 53/02

(54) **Procédé de traitement de gaz ou de liquides contenant des hydrocarbures insaturés par adsorption sur des zéolites**
Verfahren zur Behandlung von ungesättigten kohlenwasser- stoffhaltigen Gasen oder Flüssigkeiten durch Adsorption mittels Zeolithen
Process for treating unsaturated hydrocarbon-containing gases or liquids by adsorption on zeolites

(30) Priorité: 29.04.1991 FR 9105220
(43) Date de publication de la demande: 04.11.1992
(73) Titulaire: CECA S.A., 92800 Puteaux (FR)
(72) Inventeur: Nicolas, Serge, F-95100 Argenteuil (FR); Voirin, Robert, F-64300 Orthez (FR)
(74) Mandataire: Haicour, Philippe

(56) Documents cités:
- EP-A- 0 433 156
- US-A- 5 001 098
- WORLD PATENTS INDEX LATEST Week 8311, Derwent Publications Ltd., London, GB; AN83-25805K

## Description

La présente invention a trait à un perfectionnement dans les procédés de traitement dynamique des gaz ou des liquides organiques par adsorption sur adsorbants zéolitiques.

De façon très générale, on procède au traitement dynamique de charges gazeuses ou liquides sur adsorbants zéolitiques, soit dans un but de séparation de composés, soit dans un but d'épuration (désulfuration, décarbonatation, déshydratation), selon une alternance de phases d'adsorption au cours desquelles l'un des constituants de la charge reste préférentiellement piégé dans la zéolite, et de phases de désorption au cours desquelles le constituant piégé est libéré et le cas échéant récupéré, et à la suite desquelles l'adsorbant zéolitique se trouve régénéré et apte à fonctionner dans le cycle suivant d'adsorption.

On constate que la capacité de séparation de l'adsorbant évolue plus ou moins rapidement avec le nombre de cycles d'adsorption/désorption auxquels il participe. La cause principale de ce vieillissement est la formation de coke au sein de l'adsorbant et son résultat est la mise hors service de l'adsorbant à plus ou moins brève échéance. Le coke envahit les zéolites généralement à la suite de la décomposition d'hydrocarbures insaturés qui, soit existent initialement dans les gaz traités, soit se forment par cracking ou par oxydo-réduction, par exemple entre un composant hydrocarboné et le gaz carbonique, un cas fréquent étant la double décomposition entre un mercaptan et le gaz carbonique aboutissant à la formation d'oxysulfure de carbone et d'oléfine. Ces réactions se déroulent surtout au cours des phases de régénération où le procédé fonctionne à température élevée. (Sur les phénomènes d'envahissement de zéolites par le coke, voir les travaux du Laboratoire de Catalyse en Chimie Organique de l'Université de Poitiers, P. Magnoux et coll., par exemple dans J. Cat., 106(1), pp. 235-241.)

Depuis que l'on a mis à profit les propriétés des zéolites pour séparer les constituants de certains mélanges gazeux, comme par exemple la déshydratation des gaz ou la séparation non cryogénique des gaz de l'air, on les a mis en oeuvre sous forme de compositions granulaires de zéolites; mais comme celles-ci sont habituellement produites sous forme de poudres, il est nécessaire de procéder à leur mise en forme sous forme de billes ou d'extrudats après agglomération à l'aide d'un liant. Les liants argileux sont de loin les plus utilisés. Dans EP-A-0 433 156, publié le 19.06.91, ces derniers sont utilisés pour améliorer la capacité de résistance de zéolites 5A lors de leur régénération par la vapeur d'eau.

Les liants minéraux auxquels on fait généralement recours pour l'agglomération des zéolites sont des argiles. On utilise assez systématiquement les bentonites, les attapulgites, les sépiolites qui sont des argiles gonflantes et qui sont très liantes. Le kaolin a été très tôt l'une des argiles sélectionnées pour cette utilisation (voir par exemple le brevet allemand n° 1.040.005 de Union Carbide Corporation, 1960; depuis, on lui a reconnu l'aptitude à permettre la réalisation d'agglomérés relativement denses (voir le brevet US 5,001,098 de Rhône-Poulenc Chimie). Cependant il donne des pâtes dont la consistance est mal contrôlable et dont les plages de filages sont restreintes, raisons pour lesquelles, l'homme du métier tend à le négliger au profit d'autres argiles douées d'une meilleure plasticité.

La demanderesse a maintenant trouvé que le liant d'agglomération participait fortement à la formation de coke au sein des granulés zéolitiques, que les compositions de zéolites et de kaolin présentaient une bien plus grande résistance au vieillissement par chargement en coke que les granulés réalisés avec d'autres argiles courantes et que cette propriété pouvait être mise avantageusement à profit pour prolonger très sensiblement l'activité des agents adsorbants utilisés, notamment dans les procédés dits TSA (TSA = thermal swing adsorption), procédés cycliques dans lesquels la désorption est obtenue par traitement thermique de l'adsorbant saturé. L'invention consiste ainsi en l'utilisation de zéolite agglomérée au kaolin comme adsorbant particulièrement résistant au cokage pour la séparation, l'épuration ou la déshydratation de gaz naturels ou de synthèse ou de liquides hydrocarbonés, fonctionnant par cycles d'adsorption/désorption thermiques sur un adsorbant zéolitique, dans lequel, lorsque lesdits gaz ou liquides contiennent des hydrocarbures insaturés ou des composés susceptibles de générer thermiquement des hydrocarbures insaturés. L'invention est particulièrement intéressante pour l'épuration ou le séchage des gaz naturels contenant des mercaptans et du gaz carbonique, la séparation d'hydrocarbures à partir de coupes contenant des oléfines, le séchage des gaz de synthèse contenant des composés insaturés, le séchage du styrène, du gasoil.

Pour réaliser les adsorbants utiles pour l'invention, on mélange d'abord à sec les poudres de zéolites et de kaolin, auxquelles on peut ajouter du lignosulfonate et un agent de rétention de l'eau de la famille des polysaccharides. Le mélange homogénéisé est mouillé avec de l'eau et malaxé de façon à obtenir une pâte homogène et extrudable. L'extrusion est pratiquée sur des matériels bien connus de l'homme de l'art, par exemple une presse hydraulique à piston équipée de filières de géométries diverses. Les extrudés sont séchés à 100-200°C puis durcis par une calcination à 600°C. La quantité de kaolin contenue dans les agglomérés de l'invention peut varier entre 5 et 50% en poids.

Les zéolites auxquelles s'applique l'invention sont essentiellement les zéolites X, et notamment la zéolite 13X, dont on met à profit la large ouverture de leurs pores, et les zéolites A quand au contraire on veut limiter l'adsorption aux petites molécules; c'est ainsi qu'on préférera la zéolite 5A pour la séparation normales/isoparaffines ou la désulfuration, la zéolite 4A pour la décarbonatation des gaz, ou la 3A pour la déshydratation des gaz et des liquides organiques.

L'exceptionnelle résistance à la désactivation des adsorbants zéolitiques agglomérés au kaolin est ainsi mise à profit dans l'invention pour améliorer très sensiblement les performances et l'économie des procédés de traitement dynamique de gaz chaque fois que les charges traitées contiennent des quantités notables de composés insaturés ou de leurs précurseurs, et c'est par exemple le cas des gaz de synthèse qui contiennent des hydrocarbures oléfiniques ou des gaz naturels avec leurs alkylmercaptans et le CO₂, des coupes de paraffiniques que l'on veut séparer en normales et isoparaffines ou des gasoils que l'on veut déshydrater et qui renferment des quantités non négligeables d'hydrocarbures oléfiniques, ou même des composés organiques que l'on veut déshydrater et dont on constate, comme c'est le cas du styrène, qu'ils contiennent des traces d'impuretés suffisantes pour peu à peu inactiver l'adsorbant en le chargeant de coke.

Les exemples qui suivent, qui ne sont pas limitatifs, feront mieux comprendre l'invention et son intérêt industriel.

### Exemple 1

Le présent exemple illustre la résistance des agglomérés selon l'invention à un cokage qui se produit au cours de la phase de régénération de l'adsorbant du fait de la présence simultanée de mercaptan et de CO₂. Les agglomérés expérimentés comportent 50% en poids de zéolite 5A et 50% en poids d'un liant pris respectivement comme le kaolin, une bentonite Langada, une bentonite Sarde, la bentonite STF, une attapulgite (ATC/Na), une attapulgite (ATC/FGN), une sépiolite.

La composition du gaz est:

| | |
|---|---|
| butylmercaptan | 1 % |
| CO₂ | 1 % |
| H₂O | 6 % |
| N₂ | 92 % |

Dans la phase d'adsorption dont la durée est de 3 à 4 heures, déterminée par la mesure de la capacité d'adsorption à la fuite (réapparition du mercaptan dans les effluents de l'adsorbeur), la température est de 50°C, la pression de 101 KPa.

Dans la phase de régénération qui suit, la montée en température est réglée de façon à passer de 50°C à 350°C en deux heures, et la température de 350°C est maintenue en palier durant deux heures. Au cours de cette phase, la composition du gaz est la même que celle de la phase précédente.

On opère trois cycles, après quoi, on mesure le taux de carbone déposé sur les tamis.

Les résultats sont présentés dans le tableau 1.

**TABLEAU 1**

| Type de liant | Coke formé (% en poids) |
|---|---|
| kaolin | 0,37 |
| bentonite L | 0,74 |
| bentonite S | 0,82 |
| bentonite STF | 1,18 |
| attapulgite ATC/Na | 1,08 |
| attapulgite ATC/FGN | 0,69 |
| sépiolite | 0,60 |

### Exemple 2

Les conditions de l'exemple 1 sont reproduites, à la différence que la composition du gaz est maintenant:

| | |
|---|---|
| hexène | 1 % |
| CO₂ | 1 % |
| H₂O | 6 % |
| N₂ | 92 % |

Les résultats sont présentés dans le tableau 2 ci-après.

**TABLEAU 2**

| Type de liant | Coke formé (% en poids) |
|---|---|
| kaolin | 0 22 |
| Bentonite L | 0,83 |
| bentonite S | 1,26 |
| bentonite STF | 1,02 |
| attapulgite ATC/Na | 1,26 |
| attapulgite ATC/FGN | 1,71 |
| sépiolite | 1,77 |

### Exemple 3

On a opéré la désulfuration d'un gaz naturel sur aggloméré de zéolite 13X à 50% de liant, respectivement attapulgite et kaolin, la composition du gaz étant:

| | |
|---|---|
| benzène | 0,1 % |
| CO₂ | 0,03 % |
| Méthane | le reste |
| Soufre (de l'éthylmercaptan) | 500 mg/Nm³ |

Les conditions de la phase d'adsorption sont:

| | |
|---|---|
| pression | 50 bars |
| température | 45°C |
| débit des gaz | 16,6 Nm³/h |
| vitesse linéaire des gaz | 0,2 m/s |
| hauteur du lit adsorbant | 1,3 m |
| durée | 8 heures |

Les conditions de la phase de désorption sont:

| | |
|---|---|
| pression | 50 bars |
| température de palier | 350°C |
| débit des gaz | 4 Nm³/h |
| vitesse linéaire des gaz | 0,04m/s |
| hauteur du lit adsorbant | 1,3 m |

| durée: | |
|---|---|
| montée à 350°C | 2 heures |
| palier à 350°C | 7 heures |
| retour à 45°C | 7 heures |

On a suivi l'évolution de la capacité dynamique de l'adsorbant exprimée en grammes d'éthylmercaptan pour 100 grammes d'adsorbant en fonction du nombre de cycles adsorption/désorption. Les résultats sont consignés sur le tableau 3 pour deux adsorbants, l'un aggloméré au kaolin, l'autre aggloméré à l'attapulgite ATC/Na, tous deux de capacité dynamique initiale égale à 14,6.

**TABLEAU 3**

| n° du cycle | Kaolin | Attapulgite |
|---|---|---|
| 1 | 14,6 | 14,6 |
| 5 | 14,26 | 14,44 |
| 10 | 13,7 | 12,9 |
| 15 | 13,32 | 11,0 |
| 20 | 12,77 | 10,85 |
| 25 | 12,21 | 10,1 |
| 30 | 12,03 | - |
| 35 | 11,84 | - |

### Exemple 4

On a opéré le séchage de styrène sur des desséchants constitués de tamis moléculaire de type 3A aggloméré soit typiquement avec de l'attalpulgite, soit avec du kaolin. On les a mis en oeuvre comparativement dans les conditions ci-après.

Les conditions de la phase d'adsorption sont:

| | |
|---|---|
| pression | atmosphérique |
| température | 25°C |
| débit de styrène | 13 kg/h |
| vitesse linéaire | 4cm/min |
| hauteur du lit de granulés | 1 m |
| durée | 6 heures |

Les conditions de la phase de désorption sont:

| | |
|---|---|
| balayage à l'azote | 15 min |
| débit d'azote | 0,3 Nm³/h |
| vitesse linéaire | 0,14m/s |

| durée: | |
|---|---|
| chauffage à 70°C sous azote | 1 heure |
| montée à 250°C | 2 heures |
| retour à l'ambiance | 3 heures |

Après une dizaine de cycles, les taux de carbone dans les agglomérés étaient respectivement de 4,1% dans l'aggloméré à l'attapulgite et de 2,6% dans l'aggloméré au kaolin, chiffres qui traduisent une bien plus faible perte de capacité en eau de ces derniers.

## Revendications

1. Utilisation de zéolite agglomérée par du kaolin comme adsorbant particulièrement résistant au cokage pour le traitement de gaz naturels ou de synthèse ou de liquides hydrocarbonés, traitement en vue de séparation, épuration ou déshydratation fonctionnant par cycles d'adsorption /désorption thermiques sur un adsorbant zéolitique, lorsque lesdits gaz ou liquides contiennent des hydrocarbures insaturés ou des composés susceptibles de générer thermiquement des hydrocarbures insaturés.

2. Utilisation de zéolite agglomérée par du kaolin comme adsorbant selon la revendication 1, caractérisée en ce que la zéolite est une zéolite A.

3. Utilisation de zéolite agglomérée par du kaolin comme adsorbant selon la revendication 1, caractérisée en ce que la zéolite est une zéolite X.

4. Utilisation de zéolite agglomérée par du kaolin comme adsorbant selon la revendication 1, caractérisée en ce que la teneur de l'adsorbant en kaolin est comprise entre 5 et 50 % en poids.

5. Utilisation selon l'une des revendications 1 à 4, caractérisée en ce que ledit traitement consiste en la désulfuration des gaz naturels contenant du gaz carbonique.

6. Utilisation selon l'une des revendications 1 à 4, caractérisée en ce que ledit traitement consiste en la séparation des paraffines normales et des isoparaffines.

7. Utilisation selon l'une des revendications 1 à 4, caractérisée en ce que ledit traitement consiste en la déshydratation de gaz ou de liquides organiques contenant à titre d'impuretés des composés insaturés.

## Claims

1. Use of zeolite agglomerated with kaolin as an adsorbent which is particularly resistant to coking for the treatment of natural or synthesis gases or of hydrocarbon-containing liquids, treatment with a view to separation, purification or dehydration operating by thermal adsorption/desorption cycles on a zeolite adsorbent, when the said gases or liquids contain unsaturated hydrocarbons or compounds capable of thermally generating unsaturated hydrocarbons.

2. Use of zeolite agglomerated with kaolin as adsorbent according to Claim 1, characterized in that the zeolite is a zeolite A.

3. Use of zeolite agglomerated with kaolin as adsorbent according to Claim 1, characterized in that the zeolite is a zeolite X.

4. Use of zeolite agglomerated with kaolin as adsorbent according to Claim 1, characterized in that the kaolin content of the adsorbent is between 5 and 50 % by weight.

5. Use according to one of Claims 1 to 4, characterized in that the said treatment consists in the desulphurization of natural gases containing carbon dioxide gas.

6. Use according to one of Claims 1 to 4, characterized in that the said treatment consists in the separation of normal paraffins and isoparaffins.

7. Use according to one of Claims 1 to 4, characterized in that the said treatment consists in the dehydration of gases or of organic liquids containing unsaturated compounds as impurities.

## Patentansprüche

1. Verwendung von mit Kaolin agglomeriertem Zeolith als insbesondere gegenüber der Verkokung widerstandsfähigem Adsorptionsmittel zur Abtrennungs-, Reinigungs- oder Dehydratisierungsbehandlung von kohlenwasserstoffhaltigen natürlichen oder synthetischen Gasen oder Flüssigkeiten, die durchgeführt wird, indem man mit einem Zeolith-Adsorptionsmittel thermische Adsorptions-/Desorptionscyclen durchführt, wobei die Gase oder Flüssigkeiten ungesättigte Kohlenwasserstoffe oder Verbindungen enthalten, die bei thermischer Behandlung ungesättigte Kohlenwasserstoffe erzeugen können.

2. Verwendung von mit Kaolin agglomeriertem Zeolith als Adsorptionsmittel nach Anspruch 1, dadurch gekennzeichnet, daß das Zeolith ein Zeolith A ist.

3. Verwendung von mit Kaolin agglomeriertem Zeolith als Adsorptionsmittel nach Anspruch 1, dadurch gekennzeichnet, daß das Zeolith ein Zeolith X ist.

4. Verwendung von mit Kaolin agglomeriertem Zeolith als Adsorptionsmittel nach Anspruch 1, dadurch gekennzeichnet, daß der Gehalt des Adsorptionsmittels im Kaolin zwischen 5 und 55 Gew.-% liegt.

5. Verwendung nach einen, der Ansprüche 1 bis 4, dadurch gekennzeichnet, daß die Behandlung aus der Entschwefelung der natürlichen, ein kohlendioxidhaltiges Gas umfassenden Gase besteht.

6. Verwendung nach einen, der Ansprüche 1 bis 4, dadurch gekennzeichnet, daß die Behandlung aus der Abtrennung der normalen Paraffine und Isoparaffine besteht.

7. Verwendung nach einem der Ansprüche 1 bis 4, dadurch gekennzeichnet, daß die Behandlung aus der Dehydratisierung von organischen Gasen oder Flüssigkeiten besteht, die als Verunreinigungen ungesättigte Verbindungen enthalten.
